# EUROPÄISCHE PATENTSCHRIFT

(11) **EP 2 935 812 B1**
(45) Veröffentlichungstag und Bekanntmachung des Hinweises auf die Patenterteilung: **05.09.2018**
(21) Anmeldenummer: 13808004.9
(22) Anmeldetag: 17.12.2013
(51) Int. Cl.: F01M 13/04

(54) **ABSCHEIDEEINRICHTUNG FÜR EINE AEROSOLSTRÖMUNG**
SEPARATION DEVICE FOR AN AEROSOL STREAM
DISPOSITIF DE SÉPARATION POUR ÉCOULEMENT D'AÉROSOL

(30) Priorität: 18.12.2012 DE 102012223643
(43) Veröffentlichungstag der Anmeldung: 28.10.2015
(73) Patentinhaber: Mahle International GmbH, 70376 Stuttgart (DE)
(72) Erfinder: RUPPEL, Stefan, 69126 Heidelberg Emmertsgrund (DE); AKTAS, Julius, 74321 Bietigheim-Bissingen (DE); ÖZKAYA, Yakup, 70806 Kornwestheim (DE); GOERLICH, Leszek, 38307 Rochester, Michigan (US); WIESNER, Ulrich, 71332 Waiblingen (DE); SCHEFFEL, Jan, 71334 Waiblingen (DE)
(74) Vertreter: BRP Renaud & Partner mbB Rechtsanwälte Patentanwälte Steuerberater
(86) Internationale Anmeldenummer: PCT/EP2013/076821
(87) Internationale Veröffentlichungsnummer: WO 2014/095801

(56) Entgegenhaltungen:
- DE-A1-102009 024 701
- DE-U1-202005 018 435
- JP-U- S6 084 714

## Beschreibung

Die vorliegende Erfindung betrifft eine Abscheideeinrichtung zum Abscheiden von festen und/oder von flüssigen Partikeln aus einer Gasströmung, mit den Merkmalen des Oberbegriffs des Anspruchs 1. Die Erfindung betrifft außerdem eine Blowby-Gas-Reinigungseinrichtung zum Abscheiden von Öl- und Rußpartikeln aus einem Blowby-Gasstrom, die wenigstens eine derartige Abscheideeinrichtung umfasst. Die Erfindung betrifft ferner eine Kurbelgehäuseentlüftungseinrichtung für eine Brennkraftmaschine, insbesondere eines Kraftfahrzeugs, die mit wenigstens einer derartigen Abscheideeinrichtung ausgestattet ist. Schließlich betrifft die vorliegende Erfindung eine Zylinderkopfhaube für eine Brennkraftmaschine, insbesondere eines Kraftfahrzeugs, in die wenigstens eine derartige Abscheideeinrichtung integriert ist.

Aus der WO 2010/017903 A1 ist eine Abscheideeinrichtung zum Abscheiden von festen und/oder von flüssigen Partikeln aus einer Gasströmung bekannt, die bei einer Brennkraftmaschine zum Einsatz kommt, um aus einem Blowby-Gasstrom Ölpartikel und Rußpartikel abzuscheiden. Die bekannte Abscheideeinrichtung umfasst in einem Oberteil einer Ventilhaube einen Rohraum, in den das verunreinigte Blowby-Gas eintritt, einen Reinraum, aus dem das gereinigte Blowby-Gas austritt, und eine Trennwand, die den Rohraum vom Reinraum trennt. Die Trennwand ist als Lochplatte ausgebildet, so dass sie einen Lochbereich mit mehreren Durchtrittsöffnungen aufweist, durch die das Gas vom Rohraum in den Reinraum strömen kann. An einer dem Reinraum zugewandten Wandaustrittsseite der Trennwand ist eine den Lochbereich abdeckende, gasdurchlässige Abscheidestruktur aus einem Faservlies angeordnet, die bei ihrer Durchströmung die Partikel aus der Gasströmung abscheidet. Bei der bekannten Abscheideeinrichtung ist außerdem eine Prallwand vorgesehen, die an einer von der Trennwand abgewandten Außenseite der Abscheidestruktur angeordnet ist. Die Prallwand ist gasundurchlässig konzipiert. Bei der bekannten Abscheideeinrichtung ist außerdem an der Wandaustrittsseite der Trennwand eine Strömungsführungsstruktur ausgeformt, die in Richtung Prallwand von der Trennwand absteht. Die Abscheidestruktur ist dabei zwischen der Prallwand und den freien Enden der Strömungsführungsstruktur eingeklemmt, so dass die Abscheidestruktur einerseits an der Prallwand und andererseits an den Stirnseiten der Strömungsführungsstruktur vorgespannt anliegt. Bei der bekannten Abscheideeinrichtung ist somit ein Impaktor mit Prallwand realisiert. Zur Fixierung der Abscheidestruktur können auch Stifte von der Strömungsführungsstruktur abstehen, die in die Abscheidestruktur eingreifen.

Im Unterschied zu einem Filter wird ein reiner Impaktor in der Regel nicht durchströmt. Die Abscheidewirkung für in der Strömung mitgeführte feste oder flüssige Verunreinigungen beruht nicht auf einer definierten Porengröße wie bei einem Filter, sondern auf einer abrupten Strömungsumlenkung und damit einhergehenden Trägheitseffekten. Die Abscheidestruktur soll dabei nicht die Verunreinigungen aus dem Gasstrom herausfiltern, sondern nur die durch Trägheitseffekte abgebremsten Verunreinigungen aufnehmen und gegebenenfalls abführen. Für die Effizienz der Partikelabscheidung eines solchen Impaktors ist die Einhaltung eines vorbestimmten Abstands zwischen Lochbereich und Prallplatte von erhöhter Bedeutung. Aufgrund von Herstellungstoleranzen kann jedoch dieser Abstand vergleichsweise stark variieren. Gleichzeitig wird bei der bekannten Abscheideeinrichtung dadurch auch die Pressung der Abscheidestruktur entsprechend variiert, wodurch auch die Abscheidewirkung der Abscheidestruktur beeinflusst wird. Ebenso ist es grundsätzlich möglich, dass die Verpressung der Abscheidestruktur zwischen Trennwand und Prallwand aufgrund der Toleranzen so schwach wird, dass die gewünschte Lagefixierung für die Abscheidestruktur nicht gewährleistet werden kann. Außerdem kann auch die möglichst genaue Einstellung eines vorbestimmten Abstands zwischen dem Lochbereich und der Abscheidestruktur einen entscheidenden Einfluss auf die erzielbare Abscheidewirkung des Impaktors aufweisen.

Aus der DE 10 2010 029 322 A1 ist es bekannt, in einem Ventilglied eines Bypassventils Öffnungen vorzusehen und diese mit einer Abscheidestruktur abzudecken. Zumindest bei geschlossenem Ventilglied können die Öffnungen durchströmt werden, wobei die Abscheidestruktur dann eine gewisse Filterwirkung zeigt.

Weitere durchströmte und daher hauptsächlich als Filter wirkende Abscheidestrukturen sind aus der US 6 409 805 B1 und der US 4 627 406 bekannt.

Eine gattungsgemäße Abscheideeinrichtung ist aus der JP S60 84714 U bekannt. Sie umfasst einen Rohraum, in den das verunreinigte Gas eintritt, einen Reinraum, aus dem das gereinigte Gas austritt, und eine Trennwand, die den Rohraum vom Reinraum trennt, wobei die Trennwand einen Lochbereich mit mehreren Durchtrittsöffnungen aufweist, durch die das Gas vom Rohraum in den Reinraum strömen kann, wobei an einer dem Reinraum zugewandten Wandaustrittsseite der Trennwand eine den Lochbereich abdeckende, gasdurchlässige Abscheidestruktur angeordnet ist, die bei ihrer Durchströmung die Partikel aus der Gasströmung abscheidet, wobei die Abscheidestruktur an der Trennwand befestigt ist.

Die vorliegende Erfindung beschäftigt sich mit dem Problem, für eine Abscheideeinrichtung der eingangs genannten Art sowie für eine damit ausgestattete Kurbelgehäuseentlüftungseinrichtung, eine damit ausgestattete Zylinderkopfhaube und eine damit ausgestattete Blowby-Gas-Reinigungseinrichtung eine verbesserte Ausführungsformen anzugeben, die sich insbesondere durch eine verbesserte Fixierung und/oder Positionierung der Abscheidestruktur relativ zu den Durchtrittsöffnungen des Lochbereichs auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Abscheidestruktur unmittelbar an der Trennwand zu befestigen. Hierdurch lässt sich die Relativlage zwischen Trennwand und Abscheidestruktur unabhängig von einer möglichen, toleranzbehafteten Relativlage zwischen der Trennwand und einer gegebenenfalls vorhandenen Prallwand realisieren. Somit lässt sich eine gewünschte Relativlage zwischen Trennwand und Abscheidestruktur leichter mit relativ enger Toleranz herstellen.

Bei einer bevorzugten Ausführungsform kann die Abscheidestruktur ausschließlich an der Trennwand befestigt sein. Somit kann auf zusätzliche Befestigungsmaßnahmen und Befestigungselemente, die außerhalb der Trennwand liegen, verzichtet werden. Insbesondere ist zur Befestigung der Abscheidestruktur an der Trennwand keine Prallwand erforderlich.

Entsprechend einer weiteren vorteilhaften Ausführungsform kann die Abscheidestruktur im Reinraum freistehend angeordnet sein. Insbesondere kann eine von der Trennwand abgewandte Strukturaustrittsseite der Abscheidestruktur im Reinraum freistehend angeordnet sein. Das bedeutet, dass die Abscheidestruktur zumindest mit ihrer Strukturaustrittsseite abgesehen von ihrem seitlichen Rand keinen Kontakt zu einem weiteren Bauteil besitzt. Insbesondere ist kein Kontakt zu einer gegebenenfalls vorhandenen Prallwand vorhanden. Somit kann sich eine toleranzbehaftete Relativlage zwischen Trennwand und gegebenenfalls vorhandener Prallwand nicht auf die Verpressung der Abscheidestruktur auswirken.

Gemäß einer anderen besonders vorteilhaften Ausführungsform kann vorgesehen sein, dass an einer von der Trennwand abgewandten Strukturaustrittsseite der Abscheidestruktur keine Prallwand im Reinraum angeordnet ist. Mit anderen Worten, die hier vorgestellte Abscheideeinrichtung verzichtet auf eine Prallwand zur Ausbildung eines konventionellen Impaktors, der stets durch eine Prallwand charakterisiert ist. Durch das Weglassen einer derartigen Prallwand wirkt nur noch die Abscheidestruktur zum Abscheiden der Partikel aus dem Gasstrom. Die Abscheidestruktur wirkt dabei zunächst vergleichbar zu einer Filterstruktur. Da jedoch die Gasströmung mit Hilfe der Durchtrittsöffnungen auf vergleichsweise kleine Strömungsquerschnitte reduziert wird, ergeben sich auch hier innerhalb der jeweiligen Durchtrittsöffnungen relativ hohe Strömungsgeschwindigkeiten, so dass die verunreinigte Gasströmung mit hoher Geschwindigkeit auf die Abscheidestruktur trifft. In der Folge wirkt die Abscheidestruktur zusätzlich auch als Prallfläche und nicht nur als reine Filterstruktur. Auf diese Weise werden die Abscheidewirkungen eines Impaktors einerseits und eines Filters andererseits in der über die diskreten Durchtrittsöffnungen angeströmte Abscheidestruktur vereint.

Besonders vorteilhaft ist eine erfindungsgemäße Ausführungsform, bei welcher die Abscheidestruktur mit der Trennwand verschweißt ist. Derartige Schweißverfahren lassen sich besonders einfach und prozesssicher realisieren, derart, dass sich einerseits eine unerwünschte Verpressung der Abscheidestruktur vermeiden bzw. eine vorbestimmte Verpressung der Abscheidestruktur einhalten lässt und dass sich andererseits eine vorbestimmte Relativlage zwischen Abscheidestruktur und Trennwand erzielen lässt.

Erfindungsgemäß weist die Trennwand Schweißrippen auf, die insbesondere integral an der Trennwand ausgeformt sein können. Mit Hilfe dieser Schweißrippen kann nun die Abscheidestruktur besonders einfach mit der Trennwand verschweißt werden. Das bedeutet, dass die Schweißverbindung zwischen der Abscheidestruktur und der Trennwand über mehrere Schweißstellen erfolgt, die an den Schweißrippen angeordnet sind. Insbesondere lässt sich hierdurch einerseits eine Verformung der Trennwand während des Schweißvorgangs vermeiden. Andererseits ist es mit Hilfe derartiger Schweißrippen möglich, einen Abstand zwischen der Wandaustrittsseite und einer der Trennwand zugewandten Struktureintrittsseite der Abscheidestruktur vorzusehen. Dabei lässt sich ein vorbestimmter Abstand zwischen der Wandaustrittsseite und der Struktureintrittsseite relativ genau einhalten. Die Schweißrippen stehen dabei an der Wandaustrittsseite in Richtung Reinraum von der Trennwand ab.

Die Schweißrippen können gemäß einer vorteilhaften Ausführungsform in die Abscheidestruktur hineinragen. Insbesondere können die Schweißrippen während des Schweißvorgangs in die Abscheidestruktur eintauchen. Hierdurch ergibt sich eine Aussteifung bzw. Stabilisierung der Abscheidestruktur durch die darin eingebetteten Schweißrippen.

Zweckmäßig sind die Schweißrippen aus Kunststoff hergestellt. Ebenso besteht die Abscheidestruktur vorzugsweise aus einem Kunststoff. Beispielsweise handelt es sich bei der Abscheidestruktur um ein Faservlies aus Kunststofffasern.

Bei einer anderen Weiterbildung kann vorgesehen sein, dass die Schweißrippen nur so weit in die Abscheidestruktur hineinragen bzw. darin eintauchen, dass sie die Abscheidestruktur nicht durchsetzen. Mit anderen Worten, die Schweißrippen enden mit ihren von der Trennwand entfernten freien Enden innerhalb der Abscheidestruktur. Insbesondere ist dadurch eine Ausführungsform besonders einfach realisierbar, bei welcher die Verschweißung zwischen der Abscheidestruktur und den Schweißrippen bevorzugt an den freien Enden der Schweißrippen erfolgt. Hierdurch lässt sich die Schweißverbindung vergleichsweise preiswert herstellen.

Bei einer anderen vorteilhaften Ausführungsform kann die Trennwand mehrere, den Lochbereich seitlich einfassende Führungselemente aufweisen, zwischen den die Abscheidestruktur angeordnet ist. Die Führungselemente sind dabei an der Wandaustrittsseite angeordnet und stehen von der Trennwand in Richtung Reinraum ab. Hierdurch erhält die Abscheidestruktur seitlichen Halt. Erfindungsgemäß sind die Durchtrittsöffnungen an der Wandaustrittsseite jeweils von einem Kragen eingefasst, der von der Trennwand in Richtung Reinraum absteht. Mit Hilfe eines derartigen Kragens lässt sich die Länge der zugehörigen Durchtrittsöffnung vergrößern, wodurch die durch die jeweilige Durchtrittsöffnung strömende Gasströmung eine verbesserte Ausrichtung erhält und dementsprechend konzentrierter auf die Abscheidestruktur auftreffen kann, was deren Abscheidewirkung verbessert.

Entsprechend der Erfindung ist eine der Trennwand zugewandte Struktureintrittsseite der Abscheidestruktur von freistehenden Stirnseiten der Kragen beabstandet. Hierdurch kann ein vorbestimmter, vorzugsweise relativ kleiner Abstand zwischen der Struktureintrittsseite und den freistehenden Stirnseiten der Kragen realisiert werden. Da die Abscheidestruktur an der Trennwand fixiert wird, lässt sich beim Fixieren ein vorbestimmter Abstand zwischen Struktureintrittsseite und freistehenden Stirnseiten der Kragen einstellen, wobei vergleichsweise enge Toleranzen eingehalten werden können.

Durch den Abstand zwischen der Struktureintrittsseite und den freistehenden Stirnseiten der Kragen lässt sich der Durchströmungswiderstand der Abscheideeinrichtung signifikant reduzieren, da die einzelnen, durch die Durchtrittsöffnung gebildeten, konzentrierten Gasströme an der Struktureintrittsseite teilweise abprallen können und seitlich ausweichen können.

Der Abstand zwischen der Struktureintrittsseite und den freistehenden Stirnseiten der Kragen kann vorzugsweise kleiner sein als ein Durchmesser einer solchen Durchtrittsöffnung. Zweckmäßig liegen die freistehenden Stirnseiten der Kragen in einer gemeinsamen Ebene, so dass im gesamten Lochbereich ein konstanter Abstand zwischen den Stirnseiten der Kragen und der Struktureintrittsseite eingehalten werden kann. Zweckmäßig besitzen sämtliche Durchtrittsöffnungen in einer Querschnittsebene gleiche Durchmesser. Insbesondere können die Durchtrittsöffnungen kreisförmige Querschnitte aufweisen.

Bei einer anderen Ausführungsform kann vorgesehen sein, dass die Abscheidestruktur an den freistehenden Stirnseiten der Kragen unmittelbar anliegt, so dass der vorstehend genannte Abstand nicht vorhanden ist bzw. den Wert Null besitzt. In diesem Fall treten die einzelnen Gasströme der Durchtrittsöffnungen vollständig in die Tiefe der Abscheidestruktur ein.

Bei einer anderen Ausführungsform kann vorgesehen sein, dass die Durchtrittsöffnungen unmittelbar an der eben ausgestalteten Wandaustrittsseite enden, also bündig damit abschließen. Somit sind keine Kragen der vorstehend beschriebenen Art vorhanden. Auch in diesem Fall ist es möglich, die Abscheidestruktur mit ihrer Struktureintrittsseite gegenüber der Wandaustrittsseite beabstandet anzuordnen, wobei sich auch hier ein vorbestimmter, vorzugsweise kleiner Abstand, relativ einfach einhalten lässt. Alternativ lässt sich auch hier die Abscheidestruktur ohne einen derartigen Abstand an der Trennwand anordnen, so dass die Wandaustrittsseite unmittelbar an der Struktureintrittsseite anliegt.

Um die Strömungsgeschwindigkeit der Gasströmung in den Durchtrittsöffnungen zusätzlich zu erhöhen, können die Durchtrittsöffnungen als Düsen konfiguriert sein, die sich durch einen in ihrer Durchströmungsrichtung abnehmenden Strömungsquerschnitt auszeichnen. Diese Düsenkontur kann sich über die gesamte Länge der Durchtrittsöffnungen einschließlich der gegebenenfalls vorhandenen Kragen erstrecken. Ebenso ist es möglich, diese konvergierende Düsenkontur nur innerhalb der Trennwand oder nur innerhalb der Kragen vorzusehen.

Eine erfindungsgemäße Kurbelgehäuseentlüftungseinrichtung, die bei einer Brennkraftmaschine, vorzugsweise eines Kraftfahrzeugs, zum Einsatz kommt, umfasst einen Blowby-Gaspfad, der ein Kurbelgehäuse der Brennkraftmaschine mit einer Frischluftanlage der Brennkraftmaschine fluidisch verbindet. Dabei kann dieser Blowby-Gaspfad auch teilweise innerhalb eines Motorblocks verlaufen und beispielsweise durch eine Zylinderkopfhaube der Brennkraftmaschine führen. Die Frischluftanlage versorgt die Brennkraftmaschine in üblicher Weise mit Frischluft. Der Blowby-Gaspfad sorgt somit dafür, dass das Blowby-Gas nicht in die Umgebung gelangt, sondern dem Verbrennungsprozess der Brennkraftmaschine zugeführt wird. Um hierbei den Ölverbrauch der Brennkraftmaschine zu reduzieren, ist in diesem Blowby-Gaspfad zumindest eine Abscheideeinrichtung der vorstehend erläuterten Art angeordnet. Somit gelangt nur gereinigtes Blowby-Gas in die Frischluftanlage.

Eine erfindungsgemäße Zylinderkopfhaube, mit deren Hilfe ein Zylinderkopf eines Motorblocks der Brennkraftmaschine abgedeckt werden kann, umfasst einen Haubenkörper sowie zumindest eine Abscheideeinrichtung der vorstehend erläuterten Art. Der Haubenkörper ist dabei so geformt, dass er zumindest einen Teil des Rohraums und zumindest einen Teil des Reinraums der Abscheideeinrichtung begrenzt. Des Weiteren ist die Trennwand der Abscheideeinrichtung am Haubenkörper angeordnet, also entweder in Form eines separaten Bauteils daran befestigt oder daran integral ausgeformt.

Eine erfindungsgemäße Blowby-Gas-Reinigungseinrichtung, mit deren Hilfe Ölpartikel und Rußpartikel aus einem Blowby-Gasstrom abgeschieden werden können, kennzeichnet sich durch wenigstens eine Abscheideeinrichtung der vorstehend beschriebenen Art.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Schnittdarstellung einer Brennkraftmaschine mit einer Kurbelgehäuseentlüftungseinrichtung,
- Fig. 2: eine isometrische Ansicht einer Trennwand im Bereich einer Abscheidestruktur,
- Fig. 3: eine Seitenansicht der Trennwand im Bereich der Abscheidestruktur,
- Fig. 4: eine isometrische, auseinandergezogene Ansicht der Trennwand im Bereich der Abscheidestruktur.

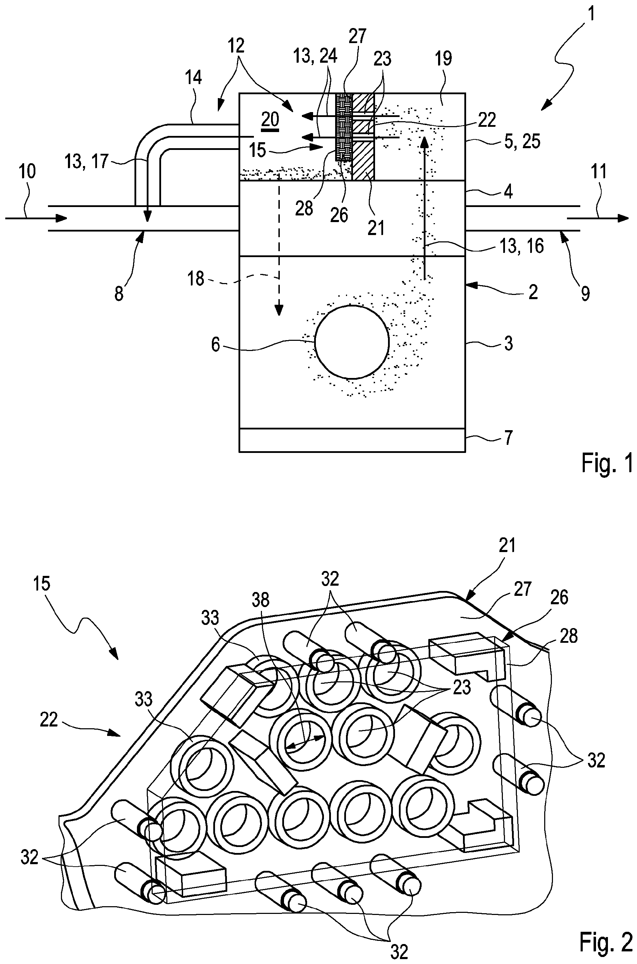

Entsprechend Figur 1 umfasst eine Brennkraftmaschine 1, die in einer stationären Einrichtung oder in einer mobilen Einrichtung, wie zum Beispiel ein Kraftfahrzeug, angeordnet sein kann, einen Motorblock 2, der in üblicher Weise ein Kurbelgehäuse 3, einen Zylinderkopf 4 und eine Zylinderkopfhaube 5 besitzt. Im Kurbelgehäuse 3 rotiert eine Kurbelwelle 6. Ferner kann sich im Kurbelgehäuse 3 ein Ölsumpf 7 befinden. Die Kurbelwelle 6 ist auf übliche Weise mit hier nicht gezeigten Kolben antriebsverbunden, die in ebenfalls nicht gezeigten Zylindern hubverstellbar angeordnet sind. Der Zylinderkopf 4 enthält üblicherweise nicht gezeigt Gaswechselventile sowie einen ebenfalls nicht gezeigten Ventiltrieb zum Steuern der Gaswechselventile. Ferner können im Zylinderkopf 4 nicht gezeigte Zündeinrichtungen sowie nicht gezeigte Kraftstoffeinspritzdüsen angeordnet sein. Die Zylinderkopfhaube 5 deckt den Zylinderkopf 4 an einer vom Kurbelgehäuse 3 abgewandten Seite ab.

Die Brennkraftmaschine 1 ist ferner in üblicher Weise mit einer Frischluftanlage 8 zum Zuführen von Frischluft zu den Brennräumen, also zu den Zylindern der Brennkraftmaschine 1 sowie mit einer Abgasanlage 9 ausgestattet, mit deren Hilfe Verbrennungsabgase von den Brennräumen abgeführt werden. Eine Frischluftströmung 10 ist durch einen Pfeil angedeutet, ebenso wie eine Abgasströmung 11.

Die Brennkraftmaschine 1 ist außerdem mit einer Kurbelgehäuseentlüftungseinrichtung 12 ausgestattet, die einen Blowby-Gaspfad 13 aufweist, der in Figur 1 durch Pfeile angedeutet ist. Dieser Blowby-Gaspfad 13 schafft eine fluidische Verbindung zwischen dem Kurbelgehäuse 3 und der Frischluftanlage 8. Im Beispiel der Figur 1 führt der Blowby-Gaspfad 13 dabei vom Kurbelgehäuse 3 durch den Zylinderkopf 4 in die Zylinderkopfhaube 5 und von dieser über eine Rückführleitung 14 zur Frischluftanlage 8. Die Kurbelgehäuseentlüftungseinrichtung 12 weist außerdem zumindest eine Abscheideeinrichtung 15 auf, die im Blowby-Gaspfad 13 angeordnet ist. Diese Abscheideeinrichtung 15 ist dabei als Blowby-Gas-Reinigungseinrichtung konzipiert, so dass sie im Blowby-Gas mitgeführte Ölpartikel und Rußpartikel aus dem Blowby-Gasstrom abscheiden kann. Des Weiteren ist die Abscheideeinrichtung 15 hier in der Zylinderkopfhaube 5 angeordnet. Es ist klar, dass die Kurbelgehäuseentlüftungseinrichtung 12 in üblicher Weise weitere Komponenten aufweisen kann, wie z.B. Rückschlagsperrventile, Drosselstellen, Schaltventile etc.. Die Kurbelgehäuseentlüftungseinrichtung 12 arbeitet wie folgt:
Während des Betriebs der Brennkraftmaschine 1 tritt über Leckagen der Kolben in den Zylindern sogenanntes Blowby-Gas in das Kurbelgehäuse 3 ein. Dabei kann das Blowby-Gas bereits Rußpartikel und Ölpartikel mit sich führen. Spätestens im Kurbelgehäuse 3 kommt es jedoch zu einer weiteren Zumischung von Ölnebel zum Blowby-Gas. Das mit Partikeln verunreinigte Blowby-Gas gelangt entsprechend einem Pfeil 16 als verunreinigter Blowby-Gasstrom durch den Zylinderkopf 4 in die Zylinderkopfhaube 5. In der Zylinderkopfhaube 5 wird das verunreinigte Blowby-Gas mit Hilfe der Abscheideeinrichtung 15 von den mitgeführten Partikeln gereinigt, so dass gemäß einem Pfeil 17 gereinigtes Blowby-Gas aus der Zylinderkopfhaube 5 über die Rückführleitung 14 in die Frischluftanlage 8 gelangt. Die abgereinigten Partikel können entsprechend einem mit unterbrochener Linie gezeichneten Pfeil 18 beispielsweise dem Kurbelgehäuse 3 rückgeführt werden.

Entsprechend den Figuren 1 bis 4 umfasst die Abscheideeinrichtung 15 einen Rohraum 19, in den das verunreinigte Gas 16 eintritt, und einen Reinraum 20, aus dem das gereinigte Gas 17 austritt. Ferner ist eine Trennwand 21 vorgesehen, die den Rohraum 19 vom Reinraum 20 trennt und die einen Lochbereich 22 mit mehreren Durchtrittsöffnungen 23 besitzt, durch die das Gas vom Rohraum 19 in den Reinraum 20 strömen kann. Entsprechende Durchtrittsströmungen sind in Figur 1 durch Pfeile 24 angedeutet.

Bei der in Figur 1 gezeigten, bevorzugten Ausführungsform ist die Abscheideeinrichtung 15 in Form einer Blowby-Gas-Reinigungseinrichtung in die Zylinderkopfhaube 5 integriert. Hierzu begrenzt ein Haubenkörper 25 der Zylinderkopfhaube 5 zumindest einen Teil des Rohraums 19 und zumindest einen Teil des Reinraums 20. Ferner ist an diesem Haubenkörper 25 die Trennwand 21 ausgebildet.

Die Abscheideeinrichtung 15 weist außerdem eine gasdurchlässige Abscheidestruktur 26 auf, die an einer dem Reinraum 20 zugewandten Wandaustrittsseite 27 der Trennwand 21 angeordnet ist und dabei den Lochbereich 22 vollständig abdeckt. Die Abscheidestruktur 26 kann beispielsweise mit Hilfe eines Faservliesmaterials hergestellt sein. Sie ist so konzipiert, dass sie bei ihrer Durchströmung die in der Gasströmung mitgeführten Partikel aus der Gasströmung abscheidet. Diese Abscheidestruktur 26 ist an der Trennwand 21 befestigt. Bevorzugt ist die Abscheidestruktur 26 ausschließlich an der Trennwand 21 befestigt. Die Abscheidestruktur 26 ist ferner im Reinraum 20 weitgehend freistehend angeordnet. Bevorzugt ist sie mit einer von der Trennwand 21 abgewandten Strukturaustrittsseite 28 im Reinraum 20 freistehend angeordnet. Wie sich Figur 1 ferner entnehmen lässt, ist an einer von der Trennwand 21 abgewandten Strukturaustrittsseite 28 der Abscheidestruktur 26 keine Prallwand im Reinraum 20 angeordnet. Eine den Reinraum 20 nach außen begrenzende Wand des Haubenkörpers 25 bildet dabei keine im Reinraum 20 angeordnete Prallwand, wenn sie wie in Fig. 1 von der Abscheidestruktur 26 in der Durchströmungsrichtung 24 beabstandet ist, z.B. um mindestens 1 oder 2 oder 5 Wandstärken der Abscheidestruktur 26.

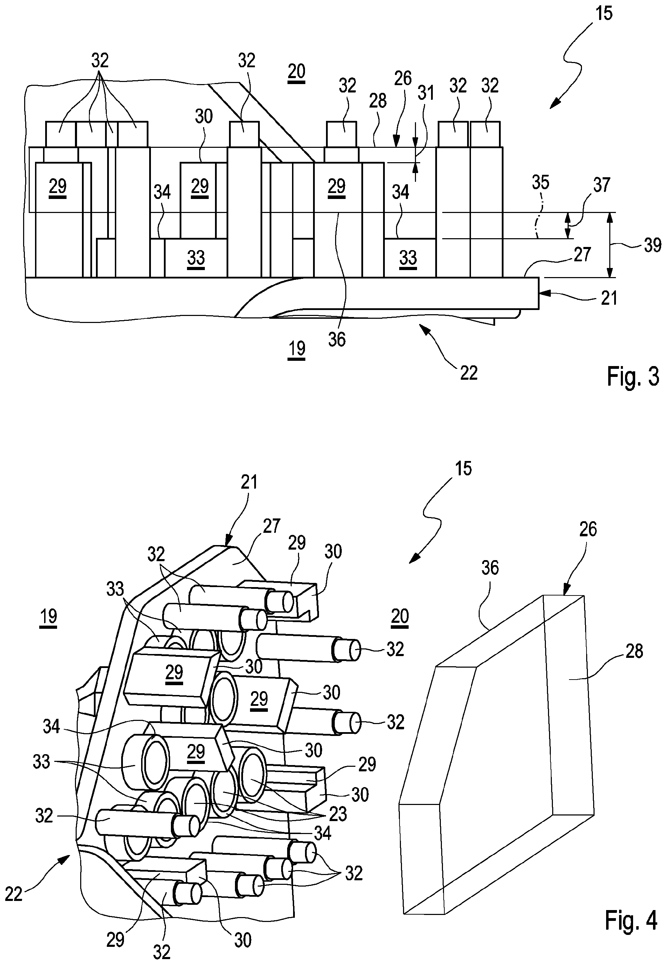

Zweckmäßig ist die Abscheidestruktur 26 mit der Trennwand 21 verschweißt. Entsprechend den Figuren 2 bis 4 weist die Trennwand 21 mehrere Schweißrippen 29 auf. Diese stehen von der Trennwand 21 an deren Wandaustrittsseite 27 in Richtung Reinraum 20 ab und besitzen dadurch freistehende Stirnseiten 30. Diese Stirnseiten 30 können insbesondere zur Ausbildung von Schweißzonen genutzt werden, beispielsweise um die Abscheidestruktur 26 durch Reibschweißen oder Ultraschallschweißen oder durch Plastifizierung oder ein NIR-Verfahren an den Schweißrippen 29 zu fixieren. Gemäß den Figuren 2 und 3 können die Schweißrippen 29 im montierten Zustand in die Abscheidestruktur 26 eintauchen bzw. darin hineinragen. Wie insbesondere Figur 3 entnommen werden kann, lässt sich dabei zwischen den Stirnseiten 30 der Schweißrippen 29 und der Strukturaustrittsseite 28 ein Abstand 31 einhalten, so dass die Schweißrippen 29 die Abscheidestruktur 26 nicht durchsetzen, sondern im Inneren der Abscheidestruktur 26 enden.

Die Trennwand 21 weist entsprechend den Figuren 2 bis 4 vorzugsweise mehrere Führungselemente 32 auf, die hier als stiftförmige Elemente ausgestaltet sind. Die Führungselemente 32 fassen den Lochbereich 22 seitlich ein. Die Führungselemente 32 stehen von der Trennwand 21 auf der Wandaustrittsseite 27 in Richtung Reinraum 20 ab. Im montierten Zustand ist die Abscheidestruktur 26 zwischen diesen Führungselementen 32 angeordnet.

Wie sich weiter den Figuren 2 bis 4 entnehmen lässt, sind bei der hier gezeigten, bevorzugten Ausführungsform die Durchtrittsöffnungen 23 an der Wandaustrittsseite 27 jeweils von einem Kragen 33 eingefasst. Der jeweilige Kragen 33 ist dabei so dimensioniert, dass er die jeweilige Durchtrittsöffnung 23 axial verlängert. Die Kragen 33 stehen an der Wandaustrittsseite 27 in Richtung zum Reinraum 20 von der Trennwand 21 ab und weisen dementsprechend jeweils eine freistehende Stirnseite 34 auf. Zweckmäßig stehen alle Kragen 33 gleich weit von der Wandaustrittsseite 27 ab, so dass die Stirnseiten 34 der Kragen 33 in einer gemeinsamen Stirnseitenebene 35 liegen.

Wie sich insbesondere Figur 3 entnehmen lässt, ist die Abscheidestruktur 26 an der Trennwand 21 so angeordnet, dass eine der Trennwand 21 zugewandte Struktureintrittsseite 36 der Abscheidestruktur 26 gegenüber den freistehenden Stirnseiten 34 der Kragen 33 beabstandet ist, also einen Abstand 37 aufweist. Dieser Abstand 37 ist vorzugsweise kleiner als ein Durchmesser 38 der kreisförmigen Querschnitte der Durchtrittsöffnungen 23, die hier in ihrer Durchströmungsrichtung einen konstanten Querschnitt besitzen. Ferner ist in Figur 3 noch ein Abstand 39 eingetragen, der zwischen der Wandaustrittsseite 27 und der Struktureintrittsseite 36 eingehalten ist.

Für eine effiziente Abscheidewirkung der Abscheidestruktur 26 ist die Einhaltung des Abstands 37, der zwischen den freien Stirnseiten 34 der Kragen 33 und der Struktureintrittsseite 36 herrscht, in engen Toleranzen erforderlich. Da die Abscheidestruktur 26 bei der hier vorgestellten Abscheideeinrichtung 15 an der Trennwand 21 selbst fixiert wird, nämlich über die Schweißrippen 29, lässt sich die Einhaltung enger Toleranzen vergleichsweise einfach durchführen.

## Patentansprüche

1. Abscheideeinrichtung zum Abscheiden von festen und/oder von flüssigen Partikeln aus einer Gasströmung,
- mit einem Rohraum (19), in den das verunreinigte Gas (16) eintritt,
- mit einem Reinraum (20), aus dem das gereinigte Gas (17) austritt,
- mit einer Trennwand (21), die den Rohraum (19) vom Reinraum (20) trennt,
- wobei die Trennwand (21) einen Lochbereich (22) mit mehreren Durchtrittsöffnungen (23) aufweist, durch die das Gas vom Rohraum (19) in den Reinraum (20) strömen kann,
- wobei an einer dem Reinraum (20) zugewandten Wandaustrittsseite (27) der Trennwand (21) eine den Lochbereich (22) abdeckende, gasdurchlässige Abscheidestruktur (26) angeordnet ist, die bei ihrer Durchströmung die Partikel aus der Gasströmung abscheidet,
- wobei die Abscheidestruktur (26) an der Trennwand (21) befestigt ist,
**dadurch gekennzeichnet,**
- **dass** die Trennwand (21) Schweißrippen (29) aufweist, mit denen die Abscheidestruktur (26) verschweißt ist,
- **dass** die Durchtrittsöffnungen (23) an der Wandaustrittsseite (27) jeweils von einem Kragen (33) eingefasst sind, der von der Trennwand (21) in Richtung Reinraum (20) absteht,
- **dass** eine der Trennwand (21) zugewandte Struktureintrittsseite (36) der Abscheidestruktur (26) von freistehenden Stirnseiten (34) der Kragen (33) beabstandet ist.

2. Einrichtung nach Anspruch 1,
**dadurch gekennzeichnet,**
**dass** die Abscheidestruktur (26) ausschließlich an der Trennwand (21) befestigt ist.

3. Einrichtung nach Anspruch 1 oder 2,
**dadurch gekennzeichnet,**
**dass** die Abscheidestruktur (26) im Reinraum (20) freistehend angeordnet ist.

4. Einrichtung nach einem der Ansprüche 1 bis 3,
**dadurch gekennzeichnet,**
**dass** eine von der Trennwand (21) abgewandte Strukturaustrittsseite (28) der Abscheidestruktur (26) im Reinraum (20) freistehend angeordnet ist.

5. Einrichtung nach einem der Ansprüche 1 bis 4,
**dadurch gekennzeichnet,**
**dass** an einer von der Trennwand (21) abgewandten Strukturaustrittsseite (28) der Abscheidestruktur (26) keine Prallwand im Reinraum (20) angeordnet ist.

6. Einrichtung nach einem der vorhergehenden Ansprüche,
**dadurch gekennzeichnet,**
**dass** die Schweißrippen (29) in die Abscheidestruktur (26) hineinragen.

7. Einrichtung nach Anspruch 6,
**dadurch gekennzeichnet,**
**dass** die Schweißrippen (29) die Abscheidestruktur (26) nicht durchsetzen.

8. Einrichtung nach einem der Ansprüche 1 bis 7,
**dadurch gekennzeichnet,**
**dass** die Trennwand (21) mehrere, den Lochbereich (22) seitlich einfassende Führungselemente (32) aufweist, zwischen denen die Abscheidestruktur (26) angeordnet ist.

9. Kurbelgehäuseentlüftungseinrichtung (12) für eine Brennkraftmaschine (1), insbesondere eines Kraftfahrzeugs,
- mit einem Blowby-Gaspfad (13), der ein Kurbelgehäuse (3) der Brennkraftmaschine (1) mit einer Frischluftanlage (8) der Brennkraftmaschine (1) fluidisch verbindet,
- wobei im Blowby-Gaspfad (13) wenigstens eine Abscheideeinrichtung (15) nach einem der Ansprüche 1 bis 8, angeordnet ist.

10. Zylinderkopfhaube für eine Brennkraftmaschine (1), insbesondere eines Kraftfahrzeugs,
- mit einem Haubenkörper (25) und mit wenigstens einer Abscheideeinrichtung (15) nach einem der Ansprüche 1 bis 8,
- wobei der Haubenkörper (25) zumindest einen Teil des Rohraums (19) und zumindest einen Teil des Reinraums (20) begrenzt,
- wobei die Trennwand (25) am Haubenkörper (25) befestigt oder integral daran ausgeformt ist.

11. Blowby-Gas-Reinigungseinrichtung zum Abscheiden von Öl- und Rußpartikeln aus einem Blowby-Gasstrom, gebildet durch wenigstens eine Abscheideeinrichtung (15) nach einem der Ansprüche 1 bis 8.

## Claims

1. A separation device for separating solid and/or liquid particles out of a gas flow,
- with a raw chamber (19), into which the contaminated gas (16) enters,
- with a clean chamber (20), out of which the cleaned gas (17) exits,
- with a dividing wall (21), which divides the raw chamber (19) from the clean chamber (20),
- wherein the dividing wall (21) comprises a perforated region (22) with multiple passage openings (23), through which the gas can flow from the raw chamber (19) into the clean chamber (20),
- wherein on a wall outlet side (27) of the dividing wall (21) facing the clean chamber (20) a gas-permeable separation structure (26) covering the perforated region (22) is arranged, which when subjected to through-flow separates the particles out of the gas flow,
- wherein the separation structure (26) is fastened to the dividing wall (21),
**characterized in**
- **that** the dividing wall (21) comprises welding ribs (29) to which the separation structure (26) is welded,
- **that** the passage openings (23) on the wall outlet side (27) are each surrounded by a collar (33), which projects from the dividing wall (21) in the direction of the clean chamber (20),
- **that** a structure inlet side (36) of the separation structure (26) facing the dividing wall (21) is spaced from freestanding face ends (34) of the collars (33).

2. The device according to Claim 1, **characterized in that** the separation structure (26) is exclusively fastened to the dividing wall (21).

3. The device according to Claim 1 or 2, **characterized in that** the separation structure (26) is arranged standing freely in the clean chamber (20).

4. The device according to any one of the Claims 1 to 3, **characterized in that** a structure outlet side (28) of the separation structure (26) facing away from the dividing wall (21) is arranged standing freely in the clean chamber (20).

5. The device according to any one of the Claims 1 to 4, **characterized in that** on a structure outlet side (28) of the separation structure (26) facing away from the dividing wall (21) no baffle wall is arranged in the clean chamber (20).

6. The device according to any one of the preceding claims, **characterized in that** the welding ribs (29) project into the separation structure (26).

7. The device according to Claim 6, **characterized in that** the welding ribs (29) do not penetrate the separation structure (26).

8. The device according to any one of the Claims 1 to 7, **characterized in that** the dividing wall (21) comprises multiple guide elements (32) laterally surrounding the perforated region (22), between which the separation structure (26) is arranged.

9. A crankcase ventilation device (12) for an internal combustion engine (1), in particular of a motor vehicle,
- with a blow-by gas path (13) which fluidically connects a crankcase (3) of the internal combustion engine (1) with a fresh air system (8) of the internal combustion engine (1),
- wherein in the blow-by gas path (13) at least one separation device (15) according to any one of the Claims 1 to 8 is arranged.

10. A cylinder head cover for an internal combustion engine (1), in particular of a motor vehicle,
- with a cover body (25) and with at least one separation device (15) according to any one of the Claims 1 to 8,
- wherein the cover body (25) bounds at least one part of the raw chamber (19) and at least one part of the clean chamber (20),
- wherein the dividing wall (25) is fastened to the cover body (25) or integrally formed thereon.

11. A blow-by gas cleaning device for separating oil and soot particles out of a blow-by gas stream, formed by at least one separation device (15) according to any one of the Claims 1 to 8.

## Revendications

1. Dispositif de séparation servant à séparer des particules solides et/ou liquides d'un écoulement de gaz,
- avec une chambre brute (19), dans laquelle le gaz non épuré (16) entre ;
- avec une salle blanche (20), de laquelle le gaz épuré (17) sort,
- avec une cloison de séparation (21), qui sépare la chambre brute (19) de la salle blanche (20),
- dans lequel la cloison de séparation (21) présente une zone perforée (22) avec plusieurs orifices de passage (23), à travers lesquels le gaz peut s'écouler de la chambre brute (19) dans la salle blanche (20),
- dans lequel est disposée, au niveau d'un côté de sortie de cloison (27), tourné vers la salle blanche (20), de la cloison de séparation (21), une structure de séparation (26) perméable aux gaz recouvrant la zone perforée (22), qui sépare les particules de l'écoulement de gaz lorsqu'elle est traversée,
- dans lequel la structure de séparation (26) est fixée au niveau de la cloison de séparation (21),
**caractérisé en ce**
- **que** la cloison de séparation (21) présente des nervures de soudage (29), auxquelles la structure de séparation (26) est soudée,
- **que** les orifices de passage (23) sont bordés au niveau du côté de sortie de cloison (27) respectivement par un collet (33), qui fait saillie de la cloison de séparation (21) dans la direction de la salle blanche (20),
- **qu'**un côté d'entrée de structure (36), tourné vers la cloison de séparation (21), de la structure de séparation (26), est tenu à distance de côtés frontaux (34) dégagés des collets (33).

2. Dispositif selon la revendication 1,
**caractérisé en ce**
**que** la structure de séparation (26) est fixée exclusivement au niveau de la cloison de séparation (21).

3. Dispositif selon la revendication 1 ou 2,
**caractérisé en ce**
**que** la structure de séparation (26) est disposée de manière dégagée dans la salle blanche (20).

4. Dispositif selon l'une quelconque des revendications 1 à 3,
**caractérisé en ce**
**qu'**un côté de sortie de structure (28), opposé à la cloison de séparation (21), de la structure de séparation (26), est disposé de manière dégagée dans la salle blanche (20).

5. Dispositif selon l'une quelconque des revendications 1 à 4,
**caractérisé en ce**
**qu'**aucune cloison d'impact n'est disposée dans la salle blanche (20) au niveau d'un côté de sortie de structure (28), opposé à la cloison de séparation (21), de la structure de séparation (26).

6. Dispositif selon l'une quelconque des revendications précédentes,
**caractérisé en ce**
**que** les nervures de soudage (29) dépassent à l'intérieur de la structure de séparation (26).

7. Dispositif selon la revendication 6,
**caractérisé en ce**
**que** les nervures de soudage (29) ne traversent pas la structure de séparation (26).

8. Dispositif selon l'une quelconque des revendications 1 à 7,
**caractérisé en ce**
**que** la cloison de séparation (21) présente plusieurs éléments de guidage (32) bordant de manière latérale la zone perforée (22), entre lesquels la structure de séparation (26) est disposée.

9. Dispositif de purge d'un carter de vilebrequin (12) pour un moteur à combustion interne (1), en particulier d'un véhicule automobile,
- avec un trajet de gaz de soufflage (13), qui relie de manière fluidique un carter de vilebrequin (3) du moteur à combustion interne (1) à une installation d'air frais (8) du moteur à combustion interne (1),
- dans lequel au moins un dispositif de séparation (15) selon l'une quelconque des revendications 1 à 8 est disposé dans le trajet de gaz de soufflage (13).

10. Capot de tête de cylindre pour un moteur à combustion interne (1), en particulier d'un véhicule automobile,
- avec un corps de capot (25) et avec au moins un dispositif de séparation (15) selon l'une quelconque des revendications 1 à 8,
- dans lequel le corps de capot (25) délimite au moins une partie de la chambre brute (19) et au moins une partie de la salle blanche (20),
- dans lequel la cloison de séparation (25) est fixée au niveau du corps de capot (25) ou y est intégralement moulée.

11. Dispositif d'épuration de gaz de soufflage servant à séparer des particules d'huile et de suie d'un flux de gaz de soufflage, formé par au moins un dispositif de séparation (15) selon l'une quelconque des revendications 1 à 8.
